# EUROPEAN PATENT APPLICATION

(11) **EP 4 459 311 A1**
(43) Date of publication of application: **06.11.2024**
(21) Application number: 24173468.0
(22) Date of filing: 30.04.2024
(51) Int. Cl.: G01S 7/00, G01S 7/41, G01S 13/95, G01W 1/00, G01S 7/06, G01S 7/20

(54) **METHOD FOR A COMPACT REPRESENTATION OF AIRBORNE WEATHER DATA FOR EXCHANGE AND STORAGE**

(30) Priority: 01.05.2023 IN 202311030981; 05.07.2023 US 202318218276
(71) Applicant: ARINC Incorporated, Annapolis, MD 21401 (US)
(72) Inventor: SISHTLA, Venkata, Cedar Rapids, IA, 52402 (US); TEAGUE, Jacob G., West Melbourne, FL, 32904 (US); RAMAMURTHY, Prasanna, 560102 Bengaluru, KA (IN); GANGADHAR, Balraj, 572106 Tumkur (IN); MULTHALLI, Santosh, 500089 Puppalguda, TE (IN); THULASIDASS, Sathiyaseelan, 642007 Pollachi, TN (IN)
(74) Representative: Dehns

(57) **Abstract**

A method approximates outlines of weather cells within the weather radar data using geometric shapes. The weather cells are filtered and clustered into clusters. The edges of the clusters are detected through an edge detection algorithm. Geometric shapes are fit to the edges of the clusters. The geometric shapes require significantly less bandwidth when transmitting over a communication channel, as compared to the weather radar data. The method saves the radar data with very few parameters and thus reduces the required memory for storage and required throughput for exchange.

## Description

### CROSS-REFERENCE TO RELATED APPLICATION(S)

The present application claims the benefit of India Provisional Patent Application 202311030981, filed on May 1, 2023, titled "METHOD FOR A COMPACT REPRESENTATION OF AIRBORNE WEATHER DATA FOR EXCHANGE AND STORAGE", and from US 18/218,276.

### TECHNICAL FIELD

The present invention generally relates to providing situational awareness for aircraft, and more specifically to radar information.

### BACKGROUND

Weather information is an important component of airborne situational awareness to enable safe and smooth flight. Connected weather relies on sharing of weather information among different stakeholders e.g., aircrafts, ground weather database, and other ground-based users, in order to achieve large scale benefits.

Hazardous weather conditions reported by onboard weather radar of aircraft is shared with ground stations in the form of Pilot Reports (PIREP). Pilot reports are relayed by radio or via electronic submission to the nearest ground station. The pilot reports make flights safer by providing the ground station with additional situational awareness. Pilot Reports (PIREPs) provide valuable information regarding the conditions as they exist in the air, which cannot be gathered from any other source. Pilots can verbally confirm the height of bases and tops of clouds, locations of windshear and turbulence, and the location of inflight icing. Pilot reports share up to 13 parameters thus, increases the pilot workload and even for the receiving end, information will not be clear as there's no visual representation of the actual weather.

Controllers are required to solicit and disseminate PIREPs on a regular basis in certain weather conditions. Pilots are urged to cooperate and promptly volunteer reports. PIREPs are used for sharing with other aircrafts and for archiving for future data analysis. The current system for PIREP management tends to be workload intensive, cumbersome to manage, and error prone. Since it is a manual process, the reporting is irregular many times i.e., not all the pilots, report PIREPS unless insisted so by the air traffic controllers. PIREPs on weather are captured manually, have limited information content and don't provide an accurate and complete weather picture.

Aircraft Meteorological Data Relay (AMDAR) records the meteorological data measured by the aircraft's existing sensors. That data is then automatically transmitted to the ground via a VHF (very high frequency) or satellite link using the aircraft's communications systems (ACARS). AMDAR generally include only temperature, horizontal wind and parametrized turbulence data. However, the AMDAR data does not have the spatial distribution pattern of Hazardous weather.

Sharing of airborne weather data between aircraft-ground station and aircraft-aircraft happen over chargeable radio data link services provided by third party service providers. The weather data is stored in ground data centers for future weather modeling / analytics and sharing with other stakeholders and subscribers. Weather researchers require the real time weather data for Analytical models to forecast the most accurate weather data.

Pilots and Flight management system (FMS) of the aircraft receive weather updates from the onboard weather radar system and/or live updates from the real-time weather databases on ground. This is used by the pilot and FMS to avoid hazardous weather zones. Small aircrafts that have low-speed data links miss the opportunity to be part of Connected weather eco system and hence lose crucial weather updates. Therefore, it would be advantageous to provide a device, system, and method that addresses the shortcomings described above.

### SUMMARY

A system is described in accordance with one or more embodiments of the present disclosure. The system includes a radar system configured to generate radar data based on power values from radar returns. The system includes a memory maintaining program instructions. The system includes one or more processors configured to execute the program instructions. The program instructions cause the one or more processors to receive the radar data. The program instructions cause the one or more processors to de-cluster the radar data into a plurality of clusters. The program instructions cause the one or more processors to detect a plurality of boundary points for each cluster of the plurality of clusters. The program instructions cause the one or more processors to fit a geometric shape defined by a plurality of parameters to the plurality of boundary points for each cluster of the plurality of clusters.

A method is disclosed, in accordance with one or more embodiments of the present disclosure. The method includes receiving radar data from a radar system. The radar system generates the radar data based on power values from radar returns. The method includes de-clustering the radar data into a plurality of clusters. The method includes detecting a plurality of boundary points for each cluster of the plurality of clusters. The method includes fitting a geometric shape defined by a plurality of parameters to the plurality of boundary points for each cluster of the plurality of clusters.

### BRIEF DESCRIPTION OF THE DRAWINGS

Implementations of the concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1A depicts an aircraft cockpit, in accordance with one or more embodiments of the present disclosure.
FIG. 1B depicts simplified view of a front of an aircraft including a radar system, in accordance with one or more embodiments of the present disclosure.
FIGS. 2A-2B depict a simplified block diagram of a system, in accordance with one or more embodiments of the present disclosure.
FIG. 3 depicts a memory including various program instructions executable by one or more processors, in accordance with one or more embodiments of the present disclosure.
FIG. 4 depicts a flow diagram of a method, in accordance with one or more embodiments of the present disclosure.
FIG. 5A depicts a radar data including two weather cells, in accordance with one or more embodiments of the present disclosure.
FIG. 5B depicts filtering and de-clustering radar data, in accordance with one or more embodiments of the present disclosure.
FIG. 5C depicts boundary points of clusters of radar data, in accordance with one or more embodiments of the present disclosure.
FIG. 5D depicts geometric shapes fit to boundary points of clusters of radar data, in accordance with one or more embodiments of the present disclosure.
FIG. 6A depicts geometric shapes for low reflectivity values, medium reflectivity values, and high reflectivity values for each cluster, in accordance with one or more embodiments of the present disclosure.
FIG. 6B depicts tables of parameters of geometric shapes for low reflectivity values, medium reflectivity values, and high reflectivity values for each cluster, in accordance with one or more embodiments of the present disclosure.

### DETAILED DESCRIPTION OF THE INVENTION

Before explaining one or more embodiments of the disclosure in detail, it is to be understood that the embodiments are not limited in their application to the details of construction and the arrangement of the components or steps or methodologies set forth description of embodiments, numerous specific details are set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Reference will now be made in detail to the subject matter disclosed, which is illustrated in the accompanying drawings. Size of weather radar data is a critical parameter that determines the size of communication payload and thus the communication cost. Similarly, the data storage capacity and cost of the ground-based weather data centers is determined by the size of the weather radar data. Also, the required computational power increases in proportion to the data size. A method to optimize the size of weather data to facilitate more cost-effective exchange and storage and reduce the required computational power is described. The method approximates the outlines of weather cells within the weather radar data using geometric shapes. The method approximates the data corresponding to hazardous weather conditions captured by the onboard radar system to regular geometric shapes and represent the shapes in terms of calculated geometrical parameters. This is achieved by identifying the hazardous weather edges through an edge detection algorithm and fitting an appropriate geometrical shape to the boundary points of weather zone. The geometric shapes advantageously require significantly less bandwidth when transmitting over communication channel (e.g., an air-to-ground, an air-to-air communication channel), as compared to the weather radar data. The method saves the radar data with very few parameters and thus reduces the required memory for storage and required throughput for exchange.

U.S. Patent No. 10,175,353, titled "Enhancement of airborne weather radar performance using external weather data"; U.S. Patent No. 9,411,044, titled "Auto updating of weather cell displays"; teach relevant background information.

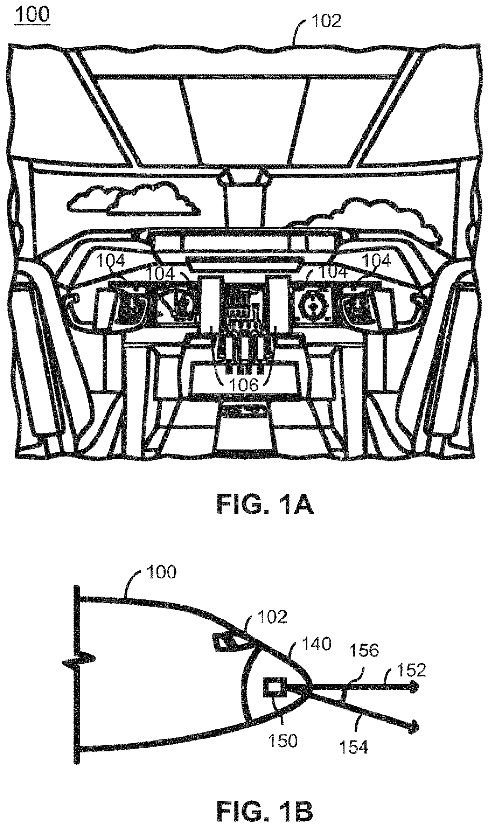

Referring to FIG. 1A, a schematic illustration of an aircraft control center or cockpit 102 is shown according to an exemplary embodiment of the inventive concepts disclosed herein. The cockpit 102 may include one or more flight displays 104 and one or more user interface ("UI") elements 106. The flight displays 104 may be implemented using any of a variety of display technologies, including CRT, LCD, organic LED, dot matrix display, and others. The flight displays 104 may be navigation (NAV) displays, primary flight displays, electronic flight bag displays, tablets, synthetic vision system displays, head up displays (HUDs) with or without a projector, and the like. The flight displays 104 may be used to provide information to the flight crew, thereby increasing visual range and enhancing decision-making abilities. One or more of the flight displays 104 may be configured to function as, for example, a primary flight display (PFD) used to display altitude, airspeed, vertical speed, and navigation and traffic collision avoidance system (TCAS) advisories. One or more of the flight displays 104 may also be configured to function as, for example, a multi-function display used to display navigation maps, weather radar, electronic charts, TCAS traffic, aircraft maintenance data and electronic checklists, manuals, and procedures. One or more of the flight displays 104 may also be configured to function as, for example, an engine indicating and crew-alerting system (EICAS) display used to display critical engine and system status data. Other types and functions of the flight displays 104 are contemplated as well. According to various exemplary embodiments of the inventive concepts disclosed herein, at least one of the flight displays 104 may be configured to provide a rendered display from the systems and methods of the present disclosure.

In some embodiments, the flight displays 104 may provide an output based on data received from a system external to an aircraft, such as a ground-based weather radar system, satellite-based system, or from a system of another aircraft. In some embodiments, the flight displays 104 may provide an output from an onboard aircraft-based radar system, LIDAR system, infrared system or other system on an aircraft. For example, the flight displays 104 may include a weather display, a weather radar map, and a terrain display. In some embodiments, the flight displays 104 may provide an output based on a combination of data received from multiple external systems or from at least one external system and an onboard aircraft-based system. The flight displays 104 may include an electronic display or a synthetic vision system (SVS). For example, the flight displays 104 may include a display configured to display a two-dimensional (2-D) image, a three-dimensional (3-D) perspective image of terrain and/or weather information, or a four-dimensional (4-D) display of weather information or forecast information. Other views of terrain and/or weather information may also be provided (e.g., plan view, horizontal view, vertical view). The views may include monochrome or color graphical representations of the terrain and/or weather information. Graphical representations of weather or terrain may include an indication of altitude of the weather or terrain or the altitude relative to an aircraft.

The Ul elements 106 may include, for example, dials, switches, buttons, touch screens, keyboards, a mouse, joysticks, cursor control devices (CCDs) or other multi-function key pads certified for use with avionics systems. The Ul elements 106 may be configured to, for example, allow an aircraft crew member to interact with various avionics applications and perform functions such as data entry, manipulation of navigation maps, and moving among and selecting checklist items. For example, the UI elements 106 may be used to adjust features of the flight displays 104, such as contrast, brightness, width, and length. The UI elements 106 may also (or alternatively) be used by an aircraft crew member to interface with or manipulate the displays of the flight displays 104. For example, the UI elements 106 may be used by aircraft crew member to adjust the brightness, contrast, and information displayed on the flight displays 104. The UI elements 106 may additionally be used to acknowledge or dismiss an indicator provided by the flight displays 104. The UI elements 106 may be used to correct errors on the flight displays 104. Other UI elements 106, such as indicator lights, displays, display elements, and audio alerting devices, may be configured to warn of potentially threatening conditions such as severe weather, terrain, and obstacles, such as potential collisions with other aircraft.

Referring to FIG. 1B, a schematic illustration of the front of an aircraft 100 is shown according to an exemplary embodiment of the inventive concepts disclosed herein. The aircraft 100 includes a nose 140, a radar system 150, and the aircraft control center or cockpit 102. The radar system 150 may also be referred to as a weather radar, onboard weather radar, and the like. The radar system 150 is generally located inside the nose 140 of the aircraft 100 or inside the cockpit 102 of the aircraft 100. According to other exemplary embodiments of the inventive concepts disclosed herein, the radar system 150 may be located anywhere on the aircraft 100, such as on the top of the aircraft 100, on the belly of the aircraft 100, on the tail of the aircraft 100, or on either or both sides of the aircraft 100. Various components of the radar system 150 may be distributed at multiple locations throughout the aircraft 100. The radar system 150 may include or be coupled to an antenna system of the aircraft 100. The radar system 150 or other equipment onboard the aircraft 100 may be configured to receive radar data from other sources. For example, the radar system 150 or other equipment aboard the aircraft 100 may receive radar data from ground-based radar systems, satellite-based systems, and from aircraft-based system of other aircraft. The radar system 150 may be any radar system configured to detect or receive data for the systems and methods of the present disclosure. According to exemplary embodiments of the inventive concepts disclosed herein, the radar system 150 may be an RTA-4218 MULTISCAN radar system, a WXR-2100 MULTISCAN radar system, an ESA (electronically scanned array) which is capable of detecting multiple threats areas (e.g., weather cells, traffic, convective weather systems (e.g., thunderstorms), turbulence, winds aloft, icing, hail, or volcanic ash, air targets (e.g., other aircraft), ground targets (e.g., other aircraft on the ground, baggage carts, and the like), terrain, and the like), or similar system.

The radar system 150 may be configured to cast one or more radar signals from an aircraft mounted antenna, to receive returns, receive echoes, and/or receive radio frequency (RF) signals. The radar system 150 may also be configured to interpret the received echoes (e.g., for display to a user by the flight displays 104, for transmission to an external weather system).

The radar system 150 may generally operate by sweeping a radar beam horizontally back and forth. For example, the radar system 150 may conduct a first horizontal sweep 152 directly in front of the aircraft 100 and a second horizontal sweep 154 downward at a tilt angle 156 (e.g., 20 degrees downward). Received echoes from different tilt angles may be electronically merged to form a composite image for display on an electronic display, such as the flight displays 104 in the cockpit 102. Received echoes may also be processed to, for example, distinguish among terrain, weather, and other objects, to determine the height of the terrain, and to determine the height of the weather.

The radar system 150 may also sweep a radar beam vertically back and forth across the sky. In some embodiments, the radar system 150 may sweep a radar beam vertically back and forth at varying vertical tilt angles. Results from the different vertical tilt angles may be analyzed to determine the characteristics of weather. For example, the altitude, range, and vertical height of weather conditions may be determined using the vertical scan results. The vertical scan results may be used to form an image for display on an electronic display. For example, a vertical profile view of the weather may be generated and provided to flight crew on the flight display 104 of the cockpit 102. The profile may be used by a flight crew to determine height, range, hazards and threats, and other relevant information that may be utilized by an aircraft crew member to evaluate a current course or to change the course of the aircraft to avoid the detected weather condition. The profile may also be used by an autonomous system which determines the height, range, hazards and threats, and other relevant information. The autonomous system may include one or more functions, such as, but not limited to, image processing to determine the height, range, hazards and threats, and other relevant information. The image processing may include an image processing model trained using machine learning or a similar approach.

In embodiments, the radar system 150 may generate radar data (e.g., radar data 302) based on the received echoes or received radio frequency (RF) signal. The radar data 302 may include, but is not limited to, ARINC 708 data, Avionics Full-Duplex Switched Ethernet (AFDX) ARINC 664 data, and the like. The ARINC 708 data may include, but is not limited to ARINC 708A data. The ARINC 708A data may include, but is not limited to, Display Mode, Gain, Tilt, Scan angle, Range, weather conditions, and/or weather alerts. The radar data 302 may include Range Bin data (e.g., reflectivity value in terms of color coding), weather alerts (e.g., Windshear Alert, Turbulence Alert, etc.), and the like. The radar data 302 may also be indicative of one or more types of weather conditions. For example, the radar data 302 may be indicative of threat areas such as, but not limited to, weather cells, convective weather systems (e.g., thunderstorms), turbulence, winds aloft, icing, hail, volcanic ash, traffic, terrain, air targets (e.g., other aircraft), ground targets (e.g., other aircraft on the ground, baggage carts, and the like), terrain, and the like. Individual weather cells may be, for example, 3-D regions of significant reflectivity or other values above one or more specified threshold values. Individual weather cells may be composed of reflectivity radial run segments, and in turn, 2-D weather components composed of segment groups and occurring at different radar elevation angles. Such weather cell data may also include individual data points and trends for each weather cell. For example, current weather cell location may be provided with azimuth, range, direction, and speed information, such as a motion vector using polar and/or Cartesian coordinates along with an estimate of any tracking errors. Other information may be included such as, for example, storm base height, storm top height, maximum reflectivity, height of maximum reflectivity, probability of hail, probability of severe hail, cell-based vertically integrated liquid (VIL) content, enhanced echo tops (EET) and centroid height, among other information types.

The radar system 150 may include control settings, such as, but not limited to, range setting, gain setting, mode setting, scan angle setting, tilt setting, GCS setting (ground clutter suppression setting), alert setting, auto/manual setting, and the like. The range setting may indicate the maximum range of the weather radials. The range setting may also be referred to as an antenna coverage range in the flight path. The gain setting may indicate the sensitivity of the radar system 150. The mode setting may include one or more modes for the radar system 150. The modes may include, but are not limited to, weather mode (WX), turbulence mode (TURB), weather and turbulence mode (WX+T), map mode (MAP), and the like. The scan angle setting may indicate a scan angle of the radar system 150. The scan angle may also be referred to as an antenna coverage value range. The tilt setting may indicate a tilt angle of the radar system 150. The GCS setting may automatically filter out ground clutter when turned on. The alert setting may provide an automatic alert upon detecting a hazardous weather condition. For example, the alert setting may include, but is not limited to, a windshear alert, turbulence alert, and the like. The auto/manual setting may automatically adjust one or more of the range setting, the gain setting, the mode setting, the tilt setting, and/or the GCS setting when set to auto. The various settings may be automatically adjusted based on avionics data. The avionics data used to adjust the various settings may include, but is not limited to, altitude, temperature, global position, time, phase-of-flight, and the like.

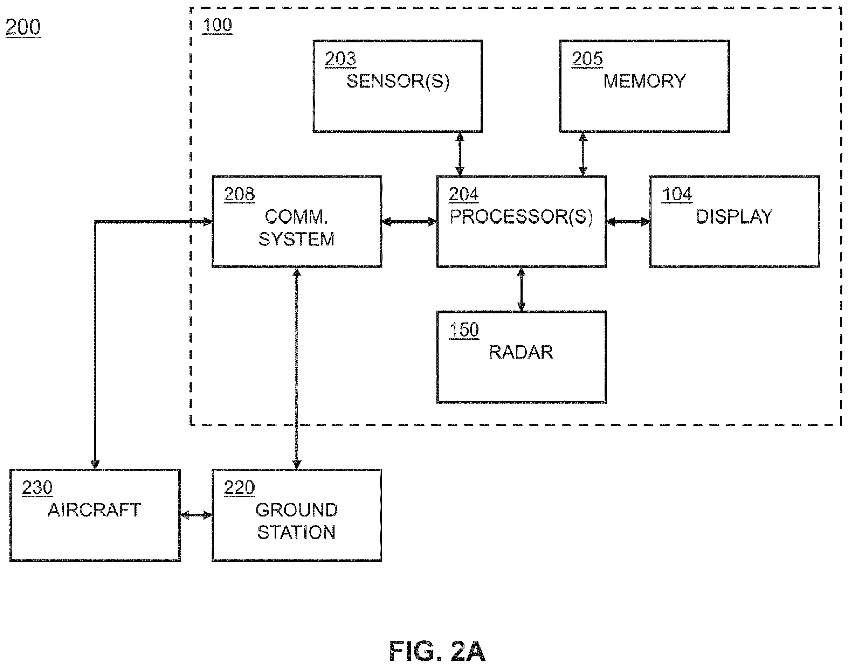

Referring to FIGS. 2A-2B, a block diagram of a system 200 is shown according to an exemplary embodiment of the inventive concepts disclosed herein. The system 200 includes the aircraft 100, a ground station 220, one or more other aircraft 230, a satellite 226, and the like. As depicted, the aircraft 100 may include the flight displays 104, the radar system 150, aircraft sensors 203, processors 204, memory 205, a communication system 208, and the like.

The aircraft sensors 203 may include, for example, one or more airspeed sensors, location tracking sensors (e.g., GPS), lightning sensors, turbulence sensors, pressure sensors, optical systems (e.g., camera system, infrared system), outside air temperature sensors, winds at altitude sensors, INS G load (in-situ turbulence) sensors, barometric pressure sensors, humidity sensors, fuel sensors, or any other aircraft sensors or sensing systems that may be used to monitor the performance of an aircraft or weather local to or remote from the aircraft. Data from the aircraft sensors 203 may be output to the processors 204 for further processing and display, for input to the radar system 150, or for transmission to a station (e.g., a ground-based radar system or terrestrial station such as the terrestrial station 220, air traffic control services system, or other terrestrial station), satellite, or to the aircraft 230 via the communication system 208. Data collected from external systems (e.g., the terrestrial station 220) may also be processed by the processors 204 to configure the collected data for display and to provide the data to the radar system 150 to be processed and used to control aspects of the radar system 150.

The radar system 150 may be a system for detecting weather patterns. Detected weather patterns may be communicated to the flight display 104 for display to the flight crew. Detected weather patterns may be provided to the processors 204 for further processing and analysis, for use in automated functions, or for transmission to an external system (e.g., the terrestrial station 220, a satellite system, the other aircraft 230) via the communication system 208.

The communication system 208 may be configured to communicate with external systems, such as the ground station 220, satellite 226, the aircraft 230, and/or a user within the aircraft 100 (e.g., to an electronic flight bag within the aircraft). In embodiments, the radar data 302 may be transmitted to the terrestrial station 220 from the communication system 208 via an air-to-ground communication channel or to the aircraft 230 from the communication system 208 via an air-to-air communication channel. The processors 204 may receive the radar data 302 from the radar system 150. The radar data 302 may be in the form of ARINC 708 data. The processors 204 may convert the radar data 302 into a format suitable for transmission to the ground station 220 from the communication system 208. The processors 204 cause the communication system 208 to transmit the radar data 302 over the communication channel using a transport layer protocol. The transport layer protocol may include, but is not limited to, User Datagram Protocol (UDP), Transmission Control Protocol (TCP), Stream Control Transmission Protocol (SCTP)), and the like. In embodiments, the transport layer protocol is UDP. The communication system 208 may then transmit the radar data 302 may be transmitted to the terrestrial station 220 or the aircraft 230.

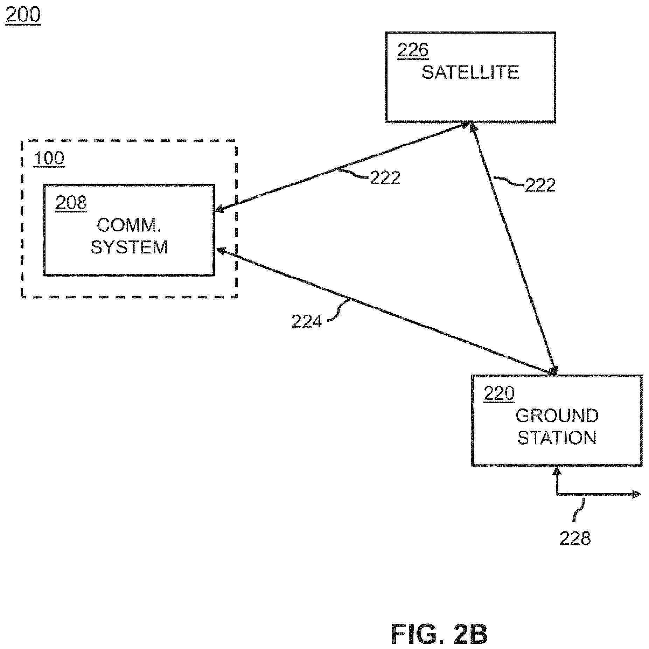

Referring to FIG. 2B, the aircraft 100 may communicate with the ground station 220 and/or the other aircraft 230 using a communication channel. The communication channel may include, but is not limited to, a satellite communication (SATCOM) link 222, a very-high frequency (VHF) link 224, a high-frequency link (not depicted), and the like. For example, the system 200 may include the satellite 226. The communication system 208 of the aircraft 100 may uplink the radar data 302 to the satellite 226 by the SATCOM link 222. The satellite 226 may then downlink the radar data 302 to the ground station 220 (e.g., to a communication system of the ground station 220). By way of another example, the communication system 208 of the aircraft 100 may communicate the radar data 302 to the ground station 220 (e.g., to a communication system of the ground station 220) by the VHF link 224. The VHF link 224 may also be considered a line-of-sight link. The ground station 220 may also receive the radar data 302 from the aircraft 100 via a wired link 228 (e.g., from one or more ground based communication systems). The ground station 220 may also receive the radar data 302 from the aircraft 100 via a high frequency (HF) link. The HF link may be considered a beyond-line of sight link which may reflect from the ionosphere.

In some embodiments, the aircraft 100 and the ground station 220 may communicate in real-time. As used herein, the term real-time may refer to a near real-time of within ten seconds of actual conditions. The real-time radar data 302 includes minor delays due to a time between received returns, aircraft processing, propagation time of the communication channel, and ground station processing.

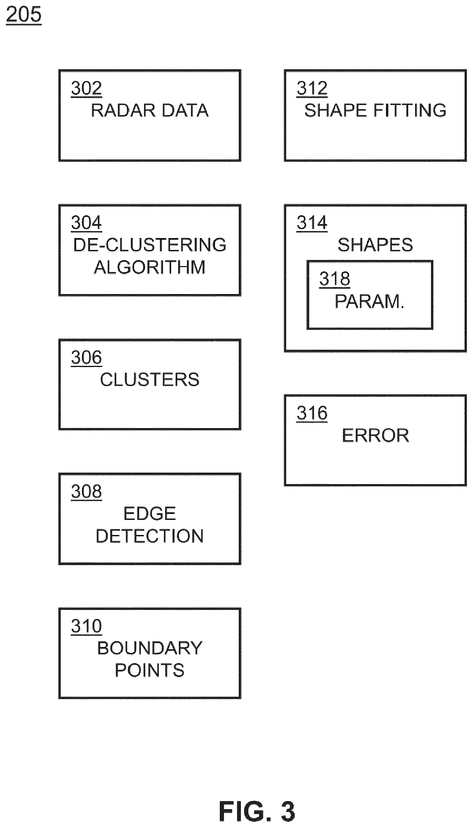

Referring now to FIG. 3, the memory 205 is described, in accordance with one or more embodiments of the present disclosure. The memory 205 may include, but is not limited to, radar data 302, de-clustering algorithm 304, clusters 306, edge detection algorithm 308, boundary points 310, shape fitting algorithm 312, shapes 314, shape error 316, and the like.

The memory 205 may include the radar data 302. The radar data 302 may be received from the radar system 150 and maintained in memory 205. In some instances, the radar data 302 may also include data for one or more range bins. Each range bin may include a power value. The power value may be the echo strength returned to the radar system 150. The radar data 302 include power values associated with a threat area including at least one of icing, turbulence, dust storms, volcanic ash, tornadoes, hail, air targets (e.g., other aircraft), ground targets (e.g., other aircraft on the ground, baggage carts, and the like), terrain, and the like.

In some embodiments, the power values are reflectivity values. The reflectivity value may also be referred to as reflective power, reflectivity, and the like. The reflectivity value may include a base reflectivity value and/or a composite reflectivity value. The reflectivity value may be a measurement of the amount of backscattered energy. The reflectivity may be measured in decibels relative to z (dBz). In this regard, the reflectivity describes the change in power emitted versus the received power value. The power emitted by the radar system 150 may be constant or known such that the received power value and the reflectivity value is related to the intensity of the weather threat. The reflectivity value may be determined based on the various control settings of the radar system 150, such as, but not limited to, the range setting, the scan angle setting, and the like. The number of the range bins may indicate a resolution of the radar data 302. Each range bin may also include a position associated with the reflectivity data. The range bins may also be referred to as range gates. The radar data 302 may include raw reflectivity data, ARINC 453 data, or the like. The reflectivity value may be determined based on a size of precipitation particles, a precipitation state, a concentration of precipitation, a shape of the precipitation, and the like.

The radar data 302 may include the power values for the range bins in polar coordinates. The position of each range bin may be defined in polar coordinates (e.g., r, θ). The polar coordinates are defined relative to a reference frame of the aircraft 100. In some embodiments, the memory 205 includes program instructions which cause the processors 204 to convert the radar data 302 from the polar coordinates (e.g., r, θ) into rectangular coordinates (x, y). The program instructions cause the processors 204 to convert the radar data 302 from the polar coordinates into the rectangular coordinates in response to receiving the radar data 302 (e.g., response to the processors 204 receiving the radar data 302 from the radar system 150). In some embodiments, the rectangular coordinates are relative to the aircraft 100 (e.g., relative to the radar system 150). In some embodiments, the rectangular coordinates are relative to a geographic coordinate system (e.g., latitude and longitude). In this regard, the memory 205 may include a transformation method to transform the radar data 302 to define the reflectivity values relative to the geographic coordinate system (e.g., latitude and longitude).

Radar data 302, in its raw form, captured by the radar system 150 is prohibitively large in size and may be unfit for sharing over airborne datalinks with ground stations and other aircrafts. Radar data 302 transmitted via the VHF link 224 must wait to establish a ground link. This problem can be overcome by using the SATCOM link 222. However, the SATCOM link 222 incurs significantly higher communications charges than the VHF link 224. An HF link may not be suitable for sharing the radar data due to the limited throughput of the radar data 302 and the relatively larger size of the radar data to be shared. In embodiments, the memory 205 includes one or more program instructions which are executable by the one or more processors 204 to convert the radar data 302 into a format suitable for transmission via the communication channel. The de-clustering algorithm 304, edge detection algorithm 308, and/or shape fitting algorithm 312 may be considered the program instructions executable by the one or more processors 204.

The memory 205 may include a de-clustering algorithm 304. The de-clustering algorithm 304 may be considered program instructions which cause the processors 204 to de-cluster the radar data 302 into clusters 306. The de-clustering algorithm 304 segregates the boundaries of each threat area (e.g., weather cell, or hazardous weather zone). The de-clustering algorithm 304 detects the boundaries of each weather cell in the radar data 302. The de-clustering algorithm 304 then groups the radar data into clusters 306 of points. In some embodiments, the memory 205 includes program instructions causing the processors 204 to filter the radar data based on the power values of the radar returns before de-clustering. For example, the reflectivity values may be filtered into low reflectivity values, medium reflectivity values, and high reflectivity values.

The memory 205 may include the clusters 306. The clusters 306 are clusters of points which are localized to an area of interest. The clusters 306 are associated with the threat areas (e.g., weather cells). For example, the clusters 306 may overlap with the threat areas. The area of interest may include a weather-related threat (e.g., a weather cell), terrain-related threat, volcanic ash, and the like. The clusters 306 of threat areas (e.g., weather cells, or hazardous weather zones) are spread across the sweep zone of the radar system 150. The clusters 306 are points of the radar data 302 which are grouped together based on power values (e.g., reflectivity values). Additionally, the points of the radar data 302 are grouped together based on proximity to adjacent points with similar reflectivity values. Each of the clusters 306 may also include an associated threat identification (e.g., weather cell ID). In some embodiments, low reflectivity clusters may be determined for low reflectivity values, medium reflectivity clusters may be determined for medium reflectivity values, and high reflectivity clusters may be determined for high reflectivity values.

The memory 205 may include an edge detection algorithm 308. The edge detection algorithm 308 may be considered program instructions which cause the processors 204 to detect boundary points 310 for each cluster of the clusters 306. The edge detection algorithm 308 is applied to the clusters 306 to detect boundary points 310 of the threat areas (e.g., weather cells). The edge detection algorithm may detect the boundaries based on changes in the power values (e.g., reflectivity values). The boundaries may be contour points which define the boundaries.

The memory 205 may include the boundary points 310. The boundary points 310 define the perimeter of the clusters 306. The boundary points 310 may also be referred to as contour points. The boundary points 310 are conformal to the shape of the clusters 306. In some embodiments, the boundary points 310 are latitude points and longitude points.

The memory 205 may include a shape fitting algorithm 312. The shape fitting algorithm 312 may be considered program instructions which cause the processors 204 to fit a geometric shape 314 defined by parameters 318 to the boundary points 310 for each cluster of the clusters 306. The shape fitting algorithm 312 fits geometric shapes 314 to the boundary points 310. The shape fitting algorithm 312 may include any geometric shape fitting algorithm that calculates the parameters 318 of a shape that closely approximates the boundary points 310.

The memory 205 may include geometric shapes 314. The geometric shapes 314 are defined by parameters 318 to the boundary points 310 for each cluster of the clusters 306. The geometric shapes 314 are fit to the boundary points 310 for each cluster of the clusters 306. In this regard, each of the clusters 306 includes separate geometric shapes 314 defining the associated cluster. The geometric shape 314 for each cluster of the clusters 306 represents the threat areas. The geometric shapes 314 then represent the spread of threat areas (e.g., weather cells, and other threat conditions) in the radar data 302.

The geometric shapes 314 may include two-dimensional or three-dimensional shapes. The geometric shapes 314 for the approximation may include any shape. The shapes may be selected considering simplicity and ease of representing the shape in analytical form with very few of the parameters 318. The selection of the geometric shape 314 may be based on the application, required data accuracy and the achievable accuracy and precision with a given shape. It is contemplated the geometric shapes 314 may include an ellipse and/or circle, however, the shapes are not intended to be so limited. It is contemplated that various other shapes may be using other appropriate geometric shapes as well.

The geometric shapes 314 are defined by parameters 318. The parameters 318 provide various geometric information regarding the geometric shapes 314. For example, the parameters 318 may provide the location, scale, orientation, and/or reflection of the geometric shapes 314. In this regard, the geometric shapes 314 are represented in analytical form, via equations. The parameters 318 include a latitude and a longitude of the geometric shape 314 for each of the clusters 306 in a geographic coordinate system. The geometrical shape 312 may be any type of geometrical shape. For example, the geometric shape 314 may be an ellipse. The parameters 318 of the ellipse may include a center latitude, center longitude, major axis, minor axis, and inclination of the ellipse (e.g., inclination of the major axis).

The parameters 318 also provide various three-dimensional information regarding the threat areas (e.g., weather cells). For example, the parameters 318 may include an altitude eye of the weather cells and/or height of the weather cells. The altitude of the weather cells indicates at what altitude the geometrical shape 314 and similarly the weather cell is located. The altitude may be from mean sea level to the weather cell. The height of the weather cell may refer to a spread of the weather pattern in the third dimension. The height may extend upwards from the altitude eye.

The parameters 318 may be calculated relative to one or more reference frames. For example, the parameters may be calculated in a reference frame relative to the aircraft 100, such as relative to the radar system 150. The parameters 318 may then be transformed to a geographic coordinate system (e.g., latitude and longitude). In some embodiments, the parameters 318 may include one or more center points of the geometric shapes.

The parameters 318 of the geometric shapes 314 represent or approximate the threat areas (e.g., weather cells). The representation is advantageous in that the size of the parameters 318 are substantially smaller than the size of the radar data 302. The size of the parameters 318 defining the geometric shape 314 for each cluster of the clusters 306 is less than a size of the radar data 302. Advantageously, a size of the parameters 318 is smaller than a size of the radar data 302. For example, the size of the parameters 318 may be several orders of magnitude smaller than the radar data 302. The size allows the parameters 318 to more easily be shared over the various SATCOM link 222, VHF link 224, and/or HF link as compared to the radar data 302. The compact representation of the radar data 302 helps in reducing the communication cost for exchanging the data among aircrafts and with ground stations. The relatively minimal size also allows the parameters 318 to be maintained in the memory 205 with reduced memory requirements as compared to the radar data 302.

In some embodiments, the program instructions cause the processors 204 to separately determine the geometric shapes 314 for low reflectivity values, medium reflectivity values, and high reflectivity values for each cluster of the clusters 306.

The memory may include an error 316. The approximation process of the radar data 302 into the geometrical shape 314 defined by the parameters 318 is a lossy process. The final geometrical representation of the radar data 302 into the geometrical shape 314 is not an exact representation of the radar data 302. The error 316 introduced due to the approximation process. The error 316 may be mean squared error. The mean squared error measures the average of the squares of the errors or the average squared difference between the geometrical shape 314 (e.g., estimated weather cell) and the associated cluster of the radar data 302 (e.g., actual weather cell). In this regard, the error 316 is the average squared difference between the geometric shape 314 and the associated cluster of the clusters 306.

In some embodiments, the parameters 318 are stored and/or exchanged in any standard file format. For example, the parameters 318 may be stored in JavaScript Object Notation (JSON) or the like. Exchanging the parameters 318 in the file format may enable data interchange of the parameters 318.

The memory 205 may include program instructions causing the processors 204 to store the parameters 318 defining the geometric shape 314 for each cluster of the clusters 306 in the memory 205. Storing the parameters 318 defining the geometric shape 314 for each cluster of the clusters 306 in the memory 205 reduces a memory requirement for the memory 205 compared to storing the radar data 302 in the memory 205.

The memory 205 may include program instructions causing the processors 204 to cause the communication system 208 to transmit the parameters 318. The communication system 208 is configured to transmit the parameters 318 defining the geometric shape 314 for each cluster of the clusters 306 via a communication channel. Transmitting the parameters 318 defining the geometric shape 314 for each cluster of the clusters 306 reduces a bandwidth of the communication channel compared to transmitting the radar data 302 via the communication channel. The communication channel may be one of a satellite communication link, a very-high frequency link, or a high frequency link. In some embodiments, the processors 204 cause the communication system 208 to transmit the parameters 318 defining the geometric shape 314 for each cluster of the clusters 306 via the communication channel in response to detecting a reflectivity in the radar data 302 is above a predefined threshold.

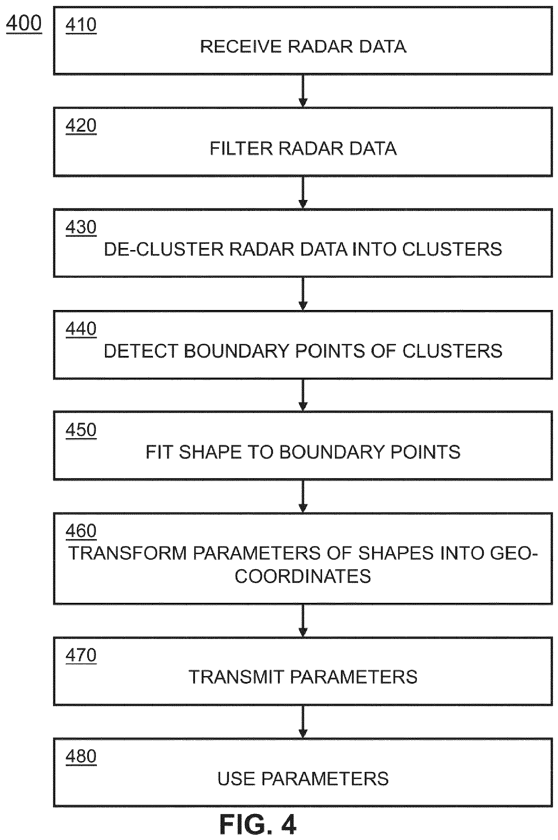

Referring now to FIG. 4, a method 400 is described, in accordance with one or more embodiments of the present disclosure. Using the method 400, weather patterns can be approximately represented with few parameters instead of using the entire raw radar data, thus minimizing the data size. The embodiments and the enabling technology described previously herein in the context of the aircraft 100, the system 200, and the processor 204 should be interpreted to extend to the method. For example, the method 400 may be implemented by aircraft 100, the system 200, and the processor 204. It is further recognized, however, that the method 400 is not limited to the aircraft 100, the system 200, and the processor 204.

In a step 410, radar data 302 is received. The radar data 302 may be received from the radar system 150. The radar data 302 may be received in any of the various formats described previously herein. The radar system 150 generates the radar data 302 based on power values from radar returns.

In a step 420, the radar data 302 may be filtered. For example, the radar data 302 may be filtered based on the power values (e.g., reflectivity values) in the radar data 302. In some embodiments, the radar data 302 is filtered to remove reflectivity values with a low reflectivity (e.g., green reflectivity values).

In a step 430, the radar data 302 is de-clustered into clusters 306. The radar data 302 may be de-clustered into the clusters 306 by the processors 204 executing the de-clustering algorithm 304 on the radar data 302.

In a step 440, boundary points 310 for each cluster of the clusters 306 are detected. The boundary points 310 for each cluster of the clusters 306 may be detected by the processors 204 executing the edge detection algorithm 308 to each cluster of the clusters 306.

In a step 450, geometric shapes 314 are fit to the boundary points 310 for each cluster of the clusters 306. The geometric shapes 314 may be fit to the boundary points 310 for each cluster of the clusters 306 by the processors 204 executing the shape fitting algorithm 312 on the boundary point 310 for each cluster. The geometric shapes 314 are defined by the parameters 318. The shape fitting algorithm 312 may also determine the parameters 318.

In a step 460, the parameters 318 of the geometric shapes 314 are transformed into a geographic coordinate system (e.g., latitude and longitude). The parameters 318 may be transformed from a rectangular coordinate system into the geographic coordinate system. The parameters 318 may be transformed into the geographic coordinate system using the position data of the aircraft 100. The parameters 318 may also be converted into a format suitable for transmission, such as JSON file format.

In a step 470, the parameters 318 are transmitted. The communication system 208 may transmit the parameters 318 and/or the error 316. The parameters 318 and/or error 316 may be transmitted to the ground station 220 via the various communication channels. For example, the parameters 318 and/or error 316 may be transmitted to the ground station 220 via the SATCOM link 222, the VHF link 224, and/or a HF link. The parameters 318 and/or error 316 may also be transmitted to the other aircraft 230. In some embodiments, the parameters 318 and/or the error 316 may be sent in packets.

In some embodiments, the parameters 318 and/or error 316 may be maintained in the memory 205 and then transferred to the ground station 220 when the aircraft 100 has landed. Transferring when the aircraft 100 has landed may avoid the communication channel when the aircraft 100 is in the air.

The parameters 318 and/or the error may be transmitted at an interval. The interval may refer to an interval at which the communication channel is used to transmit the parameters 318 and/or error 316 from the aircraft 100. In embodiments, the interval may be based on the interval in which the weather display 104 may generate a weather radar overlay based on the radar data 302. For example, the weather display 104 of the aircraft 100 may generate a weather radar overlay with multiple radials, such as, but not limited to, 720 of the range bins. Each of the range bins may be generated at frequency, such as, but not limited to, 180 hertz. For this example, new images may be generated every 4 seconds. The interval at which the parameters 318 and/or error 316 is transmitted may be based on the time to generate the image. In this example, the interval at which communication system 208 transmits the parameters 318 and/or error 316 is every 4 seconds, although this is not intended to be limiting. Transmitting the parameters 318 and/or error 316 every four seconds would then provide the ground station 220 and/or other aircrafts 230 with real-time information from the aircraft 100. It is contemplated the interval may be adjusted based on the number of the radials and the frequency at which the radials are generated. The interval may also be adjusted based on one or more control settings of the radar system 150, such as, but not limited to, range, gain, mode, scan angle, tilt, and the like. For example, the interval may be between 1 and 10 seconds. The interval may contribute to a minor delay in the real-time weather data. The real-time weather data may also include minor delays due to a processing time of the aircraft 100, a propagation time of the communication channel, and a processing time of the ground station 220. In this regard, the term "real-time" or real-time weather data may refer to every ten seconds or less.

In a step 480, the parameters 318 are used. The parameters 318 may be used by the ground station 220 and/or the other aircrafts 230. The ground station 220 and/or the other aircraft 230 may represent the clusters of threat areas (e.g., weather cells) in the radar data 302 by drawings the geometric shapes 314 according to the parameters 318 starting from the center of the weather cell at the GCS position. With these geometrical parameters, re-create the radar data 302.

The error 316 may be used by the end application and/or user to validate the parameters 318 for a specific usage. For example, an error threshold could be defined for generating inflight weather alerts and could be compared with the error 316 of the received compact radar data to decide usefulness for the intended purpose.

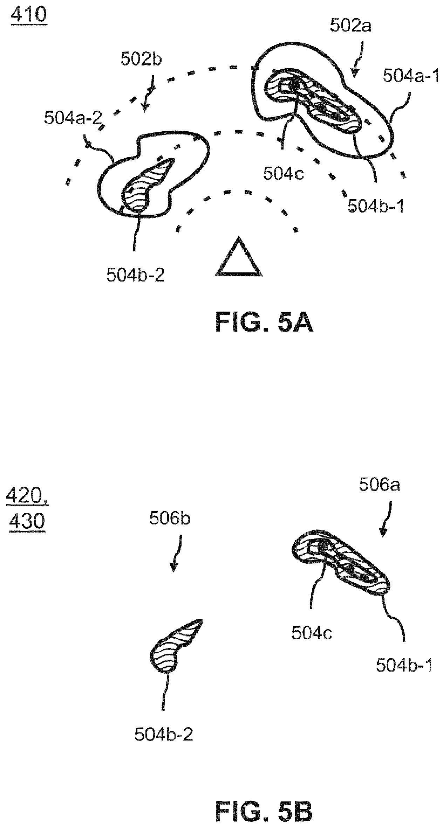

FIGS. 5A-5D illustrate one or more exemplary steps of the method 400.

Referring now to FIG. 5A, the radar data 302 is received. In the example depicted, the radar data 302 is in a format suitable for display on the flight displays. It is further contemplated that the radar data 302 may be in a raw format. Weather cells in the radar data 302 include regions of low reflectivity, medium reflectivity, and high reflectivity. The regions of low reflectivity may be displayed on the flight display 104 with a green color. The regions of medium reflectivity may be displayed on the flight display 104 with a yellow color. The regions of high reflectivity may be displayed on the flight display 104 with a red color. Radar returns with a reflectivity below a first threshold may be represented as a green, radar returns with a reflectivity between the first threshold and a second threshold may be represented as a yellow, and radar returns with a reflectivity above the second threshold may be represented as red. In this example, the radar data includes weather cell 502a and weather cell 502b. The weather cell 502a includes a region 504a-1 of low reflectivity, a region 504b-1 of medium reflectivity, and a region 504c of high reflectivity. The weather cell 502b includes a region 504a-2 of low reflectivity and a region 504b-2 of medium reflectivity.

Referring now to FIG. 5B, the radar data 302 may optionally be filtered. The radar data 302 may filter based on the color (red, yellow, green) of the reflectivity values. As depicted, the radar data 302 is filtered to remove the region 504a-1 of low reflectivity from the weather cell 502a and to remove the region 504a-2 of low reflectivity from the weather cell 502b, although this is not intended to be limiting. The radar data 302 is also de-clustered into clusters 506. The clusters 506 may also referred to as the clusters 306. In this example, a cluster 506a of points in the radar data 302 is associated with weather cell 502a and a cluster 506b of points in the radar data 302 is associated with weather cell 502b.

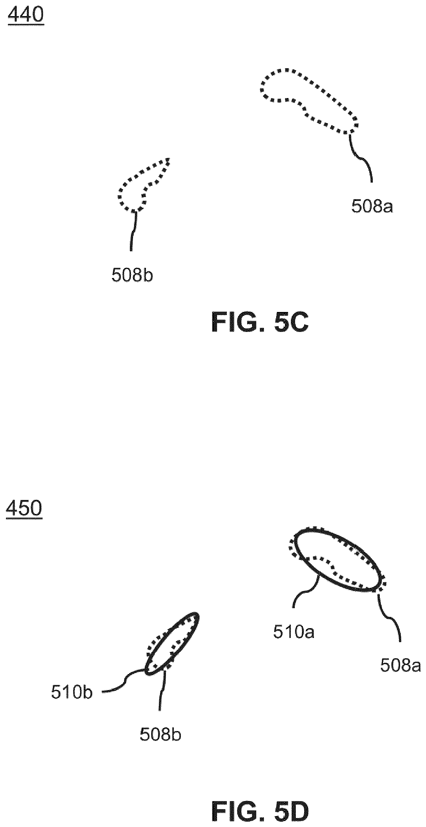

Referring now to FIG. 5C, boundary points 508 are detecting for each cluster of the clusters 506. The boundary points 508 may also referred to as the boundary points 310. As depicted, boundary points 508a are detected for the cluster 506a and boundary points 508b are detected for the cluster 506b. The boundary points 508a are the edges of the points in the cluster 506a and the boundary points 508b are the edges of the points in the cluster 506b.

Referring now to FIG. 5D, geometric shapes 510 defined by parameters are fit to the boundary points 508a for each cluster of the clusters 506. The geometric shapes 510 may also be referred to as the geometric shapes 314. As depicted, geometric shape 510a is fit to boundary points 508a the cluster 506a and geometric shape 510b is fit to boundary points 508b for the cluster 506b. As depicted, the geometric shape 510a has an error in overlapping with the cluster 506a and the geometric shape 510b has an error in overlapping with the cluster 506b.

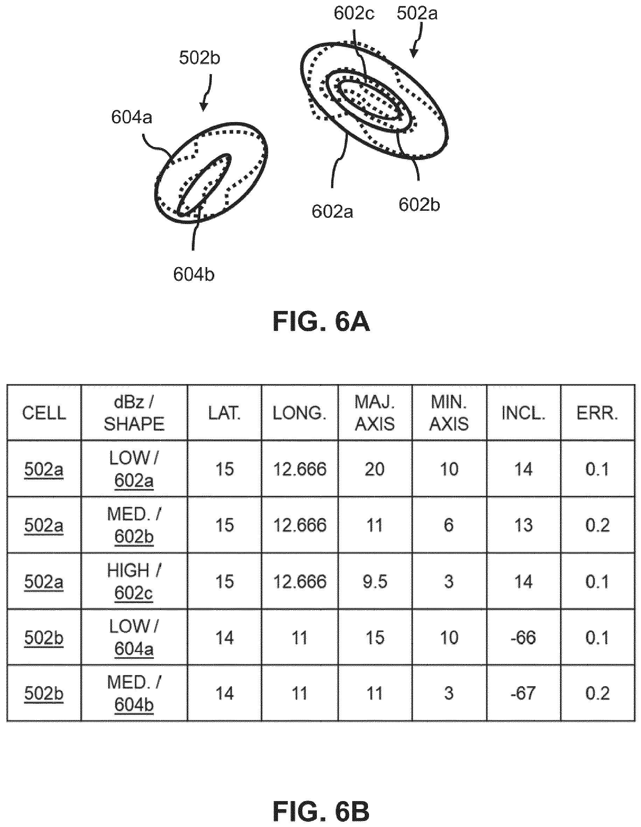

Referring now to FIG. 6A-6B, in some embodiments, it is desirable to know the geometric shape representations for each reflectivity value of the weather cell. The filtering step may be performed for each reflectivity value and the method 400 may be iteratively performed for each filtered reflectivity value. For example, the geometric shapes 314 may be separately determined for low reflectivity values, medium reflectivity values, and/or high reflectivity values for each cluster of the clusters 306. As depicted, geometric shape 602a is fit to boundary points of the low reflectivity values of cluster 506a of weather cell 502a, geometric shape 602b is fit to boundary points of the medium reflectivity values of cluster 506a of weather cell 502a, and geometric shape 602c is fit to boundary points of the high reflectivity values of cluster 506a of weather cell 502a. Also depicted, geometric shape 604a is fit to boundary points of the low reflectivity values of cluster 506b of weather cell 502b and geometric shape 604b is fit to boundary points of the medium reflectivity values of cluster 506b of weather cell 502b.

FIG. 6B depicts the geometric shapes 604 of the weather cells 502 in tabular form. As may be understood, the values provided are exemplary and are not intended to be limiting.

Referring generally again to FIGS. 1A-6B.

In some embodiments, the method 400 may be performed in response to detecting weather in the radar data 302 is hazardous. The processors 204 may identify one or more threat areas (e.g., weather cells) disposed in a flight path of the aircraft 100 based on the radar data 302. For example, the weather cells may be detected from range bin data which include the power values (e.g., reflectivity values) of weather cells in an airspace. The processors 204 may implement the method in response to detecting the reflectivity is above a predefined threshold. The reflectivity may indicate one or more severe conditions of the threat area, such as, but not limited to, severe icing, severe turbulence, dust storms, volcanic ash, tornadoes, hail, and the like. The reflectivity may also indicate one or more non-severe weather conditions (e.g., minor turbulence, rain, snow, and the like). The threshold may be between the non-severe weather conditions and severe weather conditions. In this regard, the method 400 may be performed in response to detecting weather in the radar data 302 includes the severe weather conditions.

In some embodiments, the method 400 may be may be performed in response to detecting the range and/or sector of the weather with respect to the aircraft 100 is below a threshold. The range may refer to the distance between the weather cells and the aircraft 100. The range may be determined based on the position of one or more weather cells and the position of the aircraft 100. As may be understood, the specific range is not intended to be limiting and may be configurable based on a safety tolerance. The sector may refer to the azimuth angle of the with respect to the aircraft 100. In this regard, if the weather is close enough to the aircraft 100 then the method 400 may be performed.

In some embodiments, the method 400 may be may be performed in response to determining a flight path of the aircraft 100 is through the hazardous weather condition. The processors 204 may determine the weather cells are in the flight path of the aircraft 100 based on the position of the weather cells and the known flight path of the aircraft 100.

In some embodiments, the error 316 of the approximation of the radar data 302 by the geometrical shapes 314 may be improved by increasing the number of the geometrical shapes 314 per cluster 306. However, the increase in the number of geometrical shapes 314 per cluster 306 also increases the data size.

The aircraft 100 may transmit the parameters 318 and/or the error 316. Advantageously, the parameters 318 may be transmitted without the pilot having to file or verbally communicate a PIREP.

The ground station 220 and/or the other aircrafts 230 may receive the parameters 318 and/or the error 316. The ground station 220 and/or other aircrafts 230 may translate the parameters 318 into graphical form for visualizing on a display. The graphical representation is generally easier to interpret and increases the better understanding, than textual or aural indications from a PIREP. The ground stations 220 and/or other aircrafts 230 may also generate weather alerts using the parameters 318. Receiving the parameters 318 may be particularly advantageous to allow the ground station 220 and/or the other aircrafts 220 to achieve situational awareness regarding the weather cells and other potential hazards in the environment surrounding the aircraft 100.

The ground station 220 may include a connected weather server. The connected weather server may store the parameters 318 and/or the error 316 from the aircraft 100. The ground station 220 may use the parameters 318 to guide the aircraft 100 and/or create analytical models for weather forecasting. The memory capacity for the connected weather server of the ground station 220 required for storing the parameters 318 is reduced as compared to the radar data 302. The connected weather server may also distribute the parameters 318 and/or the error 316 to other aircrafts 230.

In some embodiments, the other aircraft 230 may use the geometric shapes 314 for autonomous navigation and/or to generate weather alerts. For example, the geometric shapes 314 may be provided to a flight management system of the other aircraft 230. The flight management system may then autonomously navigate based on the geometric shapes 314 to avoid the threat object (e.g., weather cell or the like). The weather alerts may be generated using analytical solution rather than pixel processing, which saves execution time. By sharing the real time weather information with minimal size to other aircrafts, the flight crew of the other aircraft have a better situational awareness by understanding the weather condition in the trajectory.

A sample JSON data for an elliptical representation of the weather is: "Weather Approximation": {"Center Lat" : 15, "Center Long" : 12.66666, "Major axis" : 20, "Minor axis" : 10, "Inclination Major axis" : 14, "Height of weather" : 20, "Altitude Eye weather" : 10, "Mean square error" : 0.1 }.

Although much of the present disclosure is described in the context of the radar system 150 being a weather radar system and the threat areas being associated with weather cells, this is not intended as a limitation of the present disclosure. It is contemplated that any of the various advantages provided by the program instructions maintained in memory 205 and/or the method 400 may be advantageous for any number of radar systems and associated threat areas. For example, shapes may be fit to any threat areas in the radar data generated by the radar systems. It is contemplated that such threat areas may include, but are not limited to, weather cells, traffic, convective weather systems (e.g., thunderstorms), turbulence, winds aloft, icing, hail, or volcanic ash, air targets (e.g., other aircraft), ground targets (e.g., other aircraft on the ground, baggage carts, terrain, and the like.

The methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented. It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

A processor may include any processing unit known in the art. For example, the processor may include a multi-core processor, a single-core processor, a reconfigurable logic device (e.g., FPGAs), a digital signal processor (DSP), a special purpose logic device (e.g., ASICs)), or other integrated formats. Those skilled in the art will recognize that aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software/and or firmware would be well within the skill of one skilled in the art in light of this disclosure. Such hardware, software, and/or firmware implementation may be a design choice based on various cost, efficiency, or other metrics. In this sense, the processor(s) may include any microprocessor-type device configured to execute software algorithms and/or instructions. In general, the term "processor" may be broadly defined to encompass any device having one or more processing elements, which execute program instructions from memory, from firmware, or by hardware implemented functions. It should be recognized that the steps described throughout the present disclosure may be carried out by the processors.

A memory may include any storage medium known in the art. For example, the storage medium may include a non-transitory memory medium. For instance, the non-transitory memory medium may include, but is not limited to, a read-only memory (ROM), a random-access memory (RAM), a magnetic or optical memory device (e.g., disk), a solid-state drive and the like. It is further noted that memory may be housed in a common controller housing with the one or more processor(s). For example, the memory and the processor may be housed in a processing unit, a desktop computer, or the like. In an alternative embodiment, the memory may be located remotely with respect to the physical location of the processor. In another embodiment, the memory maintains program instructions for causing the processor(s) to carry out the various steps described through the present disclosure.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which fall within the scope of the invention as defined by the claims.

## Claims

1. A system comprising:
a radar system (150) configured to generate radar data based on power values from radar returns;
a memory (205) maintaining program instructions; and
one or more processors (204) configured to execute the program instructions causing the one or more processors to:
receive the radar data;
de-cluster the radar data into a plurality of clusters;
detect a plurality of boundary points for each cluster of the plurality of clusters; and
fit a geometric shape defined by a plurality of parameters to the plurality of boundary points for each cluster of the plurality of clusters.

2. The system of claim 1, wherein the plurality of clusters are associated with a plurality of threat areas; wherein the geometric shape for each cluster of the plurality of clusters represents the plurality of threat areas.

3. The system of claim 1 or 2, wherein the radar data include power values associated with at least one of icing, turbulence, dust storms, volcanic ash, tornadoes, or hail.

4. The system of any preceding claim, wherein a size of the plurality of parameters defining the geometric shape for each cluster of the plurality of clusters is less than a size of the radar data.

5. The system of claim 4, wherein the program instructions cause the one or more processors to store the plurality of parameters defining the geometric shape for each cluster of the plurality of clusters in the memory; wherein storing the plurality of parameters defining the geometric shape for each cluster of the plurality of clusters in the memory reduces a memory requirement for the memory compared to storing the radar data in the memory.

6. The system of claim 4, comprising a communication system (208); wherein the communication system is configured to transmit the plurality of parameters defining the geometric shape for each cluster of the plurality of clusters via a communication channel; wherein transmitting the plurality of parameters defining the geometric shape for each cluster of the plurality of clusters reduces a bandwidth of the communication channel compared to transmitting the radar data via the communication channel.

7. The system of claim 6, wherein the communication channel comprises one of a satellite communication link, a very-high frequency link, or a high frequency link.

8. The system of claim 6, wherein the one or more processors cause the communication system to transmit the plurality of parameters defining the geometric shape for each cluster of the plurality of clusters via the communication channel in response to detecting a reflectivity in the radar data is above a predefined threshold.

9. The system of any preceding claim, wherein the radar data comprises the power values for a plurality of range bins in polar coordinates; wherein the program instructions cause the one or more processors to convert the radar data from polar coordinates into rectangular coordinates in response to receiving the radar data.

10. The system of claim 9, wherein the program instructions cause the one or more processors to filter the radar data based on the power values of the radar returns before de-clustering.

11. The system of any preceding claim, wherein the plurality of parameters comprise a latitude and a longitude of the geometric shape for each of the plurality of clusters in a geographic coordinate system.

12. The system of claim 8, wherein the geometric shape is an ellipse; wherein the plurality of parameters comprise a major axis, a minor axis, and an inclination of the ellipse.

13. The system of any preceding claim, comprising an error; wherein the error is an average squared difference between the geometric shape and an associated cluster of the plurality of clusters.

14. The system of any preceding claim, wherein the power values are reflectivity values; wherein the program instructions cause the one or more processors to separately determine the geometric shapes for low reflectivity values, medium reflectivity values, and high reflectivity values for each cluster of the plurality of clusters.

15. A method comprising:
receiving radar data from a radar system (150); wherein the radar system generates the radar data based on power values from radar returns;
de-clustering the radar data into a plurality of clusters;
detecting a plurality of boundary points for each cluster of the plurality of clusters; and
fitting a geometric shape defined by a plurality of parameters to the plurality of boundary points for each cluster of the plurality of clusters.
